# EUROPÄISCHE PATENTANMELDUNG

(11) **EP 1 111 156 A2**
(43) Veröffentlichungstag der Anmeldung: **27.06.2001**
(21) Anmeldenummer: 00126547.9
(22) Anmeldetag: 11.12.2000
(51) Int. Cl.: E04F 13/08, E04D 3/36, F16B 13/12

(54) **Mehrteiliges Befestigungselement zur Befestigung von Dämmstoffplatten an einer Unterkonstruktion**

(30) Priorität: 23.12.1999 DE 19962795
(71) Anmelder: EJOT Kunststofftechnik GmbH & Co. KG, D-57319 Bad Berleburg (DE)
(72) Erfinder: de Gero, Paul, Dr., 57319 Bad Berleburg (DE); Tiemann, Joachim, Dipl.-Ing., 59846 Sundern (DE)
(74) Vertreter: Heselberger, Johannes

(57) **Zusammenfassung**

Die Erfindung betrifft ein Befestigungselement (1) für die Befestigung von Dämmstoffplatten an einer Unterkonstruktion mit einer Druckplatte (2), einer an der Druckplatte befestigten Dübelhülse (3) mit mindestens einer Spreizzone (4) und einem Spreizelement mit einem ersten Teil (5) und einem an den ersten Teil (5) anschließenden und in die mindestens eine Spreizzone (4) der Dübelhülse (3) mindestens teilweise einbringbaren zweiten Teil (6), wobei der erste Teil (5) des Spreizelements und der zweite Teil (6) des Spreizelements aus nicht-metallischen Materialien bestehen.

## Beschreibung

Die Erfindung betrifft ein Befestigungselement für die Befestigung von Dämmstoffplatten an einer Unterkonstruktion gemäß dem Oberbegriff des Anspruchs 1.

Die Erfindung geht aus von einem Befestigungselement wie es z.B. in der DE 195 39 041 A1 beschrieben ist. Das dort offenbarte Befestigungselement besteht aus einem Dübel sowie aus einem in den Dübel einfügbaren zweiteiligen Spreizelement. Der erste Teil des Spreizelements, der zum Spreizen des Dübels vorgesehen ist, ist aus Metall gebildet, wogegen der zweite Teil, der zur Übertragung der von einem Schlagwerkzeug wie z.B. einem Hammer ausgeübten Kraft auf den ersten Teil vorgesehen ist, aus Kunststoff gebildet ist. Nachteilig bei dieser Konstruktion wirkt sich die Korrosionsanfälligkeit des ersten metallischen Teils des Befestigungselements aus, welche über einen längeren Zeitraum schließlich zum Verlust der Haltefähigkeit sowie zur Bildung von Rostflecken an der Wandoberfläche führen kann. Darüber hinaus weist der erste metallische Teil des Spreizelements im Vergleich zu den restlichen Teilen des Befestigungselements ein hohes Gewicht auf. Auch das Fertigen der einzelnen Teile ist insofern aufwendig, da die Formgebung, insbesondere die Oberflächenprofilierung des metallischen Spritzteils kostspielig ist. Schließlich ermöglichen metallische Teile die Bildung von unerwünschten Wärmebrücken.

In der genannten Druckschrift wird auch ein einteiliger Kunststoffnagel beschrieben, der allerdings aufgrund seiner Länge wegen der dann erforderlichen langen Spritzwerkzeuge schwierig herstellbar ist und überdies, je nach der Wahl des Kunststoffmaterials entweder im oberen Bereich, in dem vor allem Biegsamkeit gefordert ist, zu hart, oder im unteren Bereich, in dem besonders Festigkeit verlangt ist, zu weich ist. Darüber hinaus ist ein einzelner langer Kunststoffnagel knickempfindlich, aufgrund des auftretenden Hebelarms und von unvermeidlichen Verformungen, insbesondere bei Querverformungen der gehaltenen Dämmstoffplatten.

Die Aufgabe der vorliegenden Erfindung ist es, die Nachteile der im Stand der Technik bekannten Befestigungselemente zu überwinden.

Diese Aufgabe wird mit einem Befestigungselement gemäß Anspruch 1 gelöst. Erfindungsgemäß wird sowohl der erste Teil des Spreizelements als auch der zweite Teil des Spreizelements aus einem nicht-metallischen, insbesondere einem Kunststoffmaterial gebildet. Auf vorteilhafte Weise kann ein Korrodieren des Spreizelements vermieden werden und es kann somit die Haltefähigkeit des Befestigungselements auch bei widrigen äußeren Einflüssen über lange Zeit gewährleistet werden. Darüber hinaus wird das Gesamtgewicht des Befestigungselements deutlich reduziert. Die notwendige Tragfähigkeit der Befestigung ist, entgegen dem häufig vorherrschenden Vorurteil, daß nichtmetallische Elemente eine geringere Tragfähigkeit aufweisen, bei Anwendung der vorliegenden Erfindung gewährleistet. Wärmebrücken können in sehr viel geringerem Maß als bei metallischen Elementen entstehen. Schließlich können nicht-metallische, insbesondere Kunststoffteile in Formung und Oberflächengestaltung viel einfacher und auch genauer hergestellt werden. Beispielsweise kann das zweite Teil an seiner Außenseite mit einer Rippenstruktur versehen werden, um die Kontaktfläche mit der Dübelhülse zu reduzieren und so mehr Elastizität zu schaffen, die für seitlichen Lastabtrag von Bedeutung ist und um die Einbringbarkeit des Spreizteils in die Dübelhülse zu erleichtern.

Besonders vorteilhaft gestaltet sich die Herstellung des Befestigungselements, wenn die beiden Teile des Spreizelements aus verschiedenen Materialien gebildet werden. Damit kann jeder Teil eigens für die für ihn vorgesehene Aufgabe, wie oben beschrieben, ausgelegt werden.

Weitere Vorteile, Merkmale und Anwendungsmöglichkeiten der vorliegenden Erfindung ergeben sich aus der nachfolgenden Beschreibung mit Bezug auf die Zeichnung, in welcher:

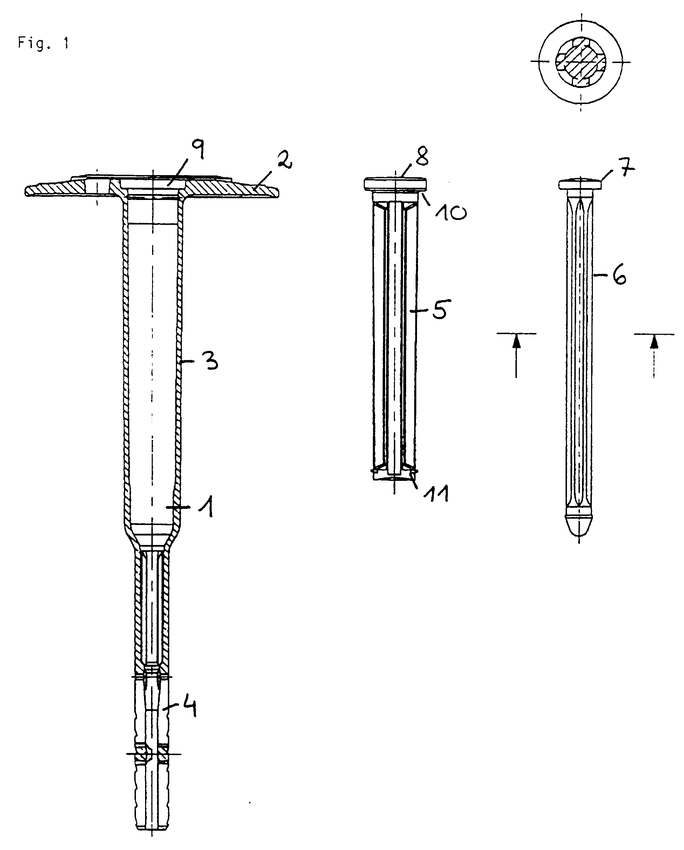

- Fig. 1: eine schematische Darstellung eines erfindungsgemäßen Befestigungselements zur schlagenden Montage des Spreizelements in eine Dübelhülse zeigt.

Figur 1 zeigt eine Seitenansicht eines erfindungsgemäßen Befestigungselements 1, bzw. die einzelnen Teile, aus denen sich das Befestigungselement 1 zusammensetzt. Das Befestigungselement 1 weist eine Druckplatte 2, eine Dübelhülse 3 mit mindestens einer Spreizzone 4 und ein Spreizelement mit einem ersten Teil 5, der als Schlagbolzen ausgestattet ist, aus einem nichtmetallischen Material, vorzugsweise aus Kunststoff, mit einem Kopf 8 und einem zweiten, in die mindestens eine Spreizzone 4 der Dübelhülse 3 mindestens teilweise einbringbaren, ebenfalls vorzugsweise aus Kunststoff gebildeten Teil 6 auf. Zur Montage wird der zweite Teil 6 des Spreizelements durch die obere Öffnung der Druckplatte 2 in die Dübelhülse 3 eingeführt. Durch Einbringen des ersten Teils 5 in die Dübelhülse 3 kommt dieser in Kontakt mit dem zweiten Teil 6 des Spreizelements. Durch Schläge auf den Kopf 8 des Spreizelements, der hier mit einer Schulter 10 versehen ist, wird der erste Teil 5 des Spreizelements an seinem dem Kopf 8 abgewandten Ende aufgespreizt, so daß er an diesem Ende das dem Kopf 8 zugewandte Ende des zweiten Teils 6 des Spreizelements beispielsweise in Form einer Ring-Schnapp-Verbindung aufnehmen kann. Der Kopf 7 kann dadurch in die Öffnung 11 einschnappen. Diese Verbindung kann sogar verdrehsicher sein, um statt dem hier beschriebenen Einschlagen ein Einschrauben zu ermöglichen. Durch Anwenden größerer Einschlagkräfte wird der zweite Teil 6 des Spreizelements weiter in die Spreizzone 4 der Dübelhülse 3 eingetrieben. Wenn die an dem Kopf 8 des Spreizelements vorzugsweise vorgesehene Schulter 10 in der dafür vorgesehenen Vertiefung 9 der Druckplatte 2 aufliegt und der Kopf 8 der Druckplatte 2 bündig abschließt, ist das Spreizelement fest, sicher und zuverlässig in der Dübelhülse 3 verankert, was mit einer sicheren Befestigung einer zu befestigenden, hier nicht dargestellten Dämmstoffplatte an einer Unterkonstruktion einhergeht.

Der untere Teil 6 zeigt hier Rippen in seiner Längsrichtung, um die Kontaktfläche mit der Dübelhülse 3 zu vermindern und damit auch in diesem Bereich mehr Flexibilität und, vor allem, erleichterte Einbringbarkeit des Spreizteils in die Dübelhülse zu erreichen.

## Patentansprüche

1. Befestigungselement (1) für die Befestigung von Dämmstoffplatten an einer Unterkonstruktion mit einer Druckplatte (2), einer an der Druckplatte befestigten Dübelhülse (3) mit mindestens einer Spreizzone (4) und einem Spreizelement mit einem ersten Teil (5) und einem an den ersten Teil (5) anschließenden und in die mindestens eine Spreizzone (4) der Dübelhülse (3) mindestens teilweise einbringbaren zweiten Teil (6), **dadurch gekennzeichnet, daß**
der erste Teil (5) des Spreizelements und der zweite Teil (6) des Spreizelements aus nicht-metallischen Materialien bestehen.

2. Befestigungselement (1) nach Anspruch 1 oder 2, dadurch gekennzeichnet, daß der erste Teil (5) des Spreizelements, der zweite Teil (6) des Spreizelements und die Dübelhülse (3) aus verschiedenen Kunststoffmaterialen bestehen.

3. Befestigungselement (1) nach einem der Ansprüche 1 bis 3, dadurch gekennzeichnet, daß der erste Teil (5) des Spreizelements mit dem zweiten Teil (6) des Spreizelements an einer Verbindungsstelle (7) verbindbar ist.
